# EUROPÄISCHE PATENTSCHRIFT

(11) **EP 3 539 356 B1**
(45) Veröffentlichungstag und Bekanntmachung des Hinweises auf die Patenterteilung: **14.10.2020**
(21) Anmeldenummer: 17816820.9
(22) Anmeldetag: 15.12.2017
(51) Int. Cl.: H05B 45/37

(54) **SCHALTREGLER UND BETRIEBSGERÄT ZUM BETREIBEN VON LEUCHTMITTELN**
SWITCHING REGULATOR AND OPERATING DEVICE FOR OPERATING ILLUMINANTS
RÉGULATEUR DE COMMUTATION ET DISPOSITIF DE FONCTIONNEMENT POUR FAIRE FONCTIONNER DES MOYENS D'ÉCLAIRAGE

(30) Priorität: 15.12.2016 DE 202016007619 U
(43) Veröffentlichungstag der Anmeldung: 18.09.2019
(73) Patentinhaber: Tridonic GmbH & Co KG, 6851 Dornbirn (AT)
(72) Erfinder: MITTERBACHER, Andre, 6850 Dornbirn (AT)
(74) Vertreter: Beder, Jens
(86) Internationale Anmeldenummer: PCT/EP2017/083044
(87) Internationale Veröffentlichungsnummer: WO 2018/109171

(56) Entgegenhaltungen:
- EP-A1- 2 230 885
- DE-A1- 10 357 776
- DE-A1-102015 203 249
- US-A1- 2008 272 744
- US-A1- 2009 273 288

## Beschreibung

Die vorliegende Erfindung betrifft einen Schaltregler zum Betreiben von Leuchtmitteln gemäß dem Oberbegriff des Anspruchs 1 sowie ein Betriebsgerät mit einem solchen Schaltregler. Die Erfindung betrifft insbesondere Schaltregler, die in Betriebsgeräten zum Versorgen einer oder mehrerer Leuchtdioden eingesetzt werden.

Ein Betriebsgerät zum Versorgen einer oder mehrerer Leuchtdioden ist aus der WO 2013/152368 A1 bekannt. Solche Betriebsgeräte dienen hauptsächlich dazu, eine gewünschte Energieversorgung für das Leuchtmittel, wie zum Beispiel eine Leuchtdiode (LED) oder mehrere in Serie und/oder parallel verschaltete Leuchtdioden, bereitzustellen. Zusätzliche Funktionen, wie das Dimmen der Leuchtmittel, die Veränderung/Anpassung der Lichtfarbe oder die Kompensation von Schwankungen der Eingangsspannung, können in dem Betriebsgerät vorgesehen sein Ein Schaltregler zum Betreiben von Leuchtmitteln ist aus der US2009/273288 bekannt.

Die Lichtabstrahlung einer Leuchtdiode hängt vom Stromfluss durch die Leuchtdiode ab. Zur Helligkeitssteuerung oder Helligkeitsregelung werden Leuchtdioden daher typischerweise in einem Modus betrieben, in dem der Stromfluss durch die Leuchtdiode durch das Betriebsgerät gesteuert oder geregelt wird.

Zur Ansteuerung von Leuchtdioden können Schaltregler verwendet werden, beispielsweise Aufwärtswandler oder Abwärtswandler, die in der Technik auch als Boost-Konverter bzw. Buck-Konverter bezeichnet werden. In einem derartigen Schaltregler steuert eine Steuereinrichtung einen schnellen Schalter an, der im eingeschalteten Zustand einen Stromfluss durch eine Spule (beim Buck-Konverter auch durch die Leuchtdiode) bewirkt. Nach dem Ausschalten treibt die Spule (beim Buck-Konverter) den Strom weiter durch die Leuchtdiode.

Für die Steuerung oder Regelung wird in dem Schaltregler eine Vielzahl von Messgrößen erfasst und jeweils mit vorgegebenen Soll-Werten verglichen, um Ein-/Ausschaltzeiten des Schalters oder Abweichungen von vorgegebenen Betriebsparametern, wie Lichtfarbe und Helligkeit, oder Verschiebungen im Lichtspektrum bei unterschiedlichen Dimmpegeln, entgegenwirken zu können.

Die Soll-Werte sind in der Steuereinrichtung (Controller) gespeichert und werden oft digital ausgegeben, wohingegen die Messgrößen analog vorliegen, so dass die von der Steuereinrichtung ausgegebenen digitalen Werte für einen Vergleich mit den analogen Messgrößen durch einen Komparator in analoge Signale umgewandelt werden müssen.

Die von der Steuereinrichtung ausgegebenen digitalen Werte können in einer sehr hohen Auflösung (beispielsweise 14 Bit) vorliegen, was dann einen teuren Digital-Analog-Wandler nötig macht. Alternativ könnte ein günstiger, niedrigauflösender Digital-Analog-Wandler (beispielsweise 10 Bit oder 12 Bit) verwendet werden, wodurch jedoch die Feinheit/Genauigkeit des Abgleichs verringert wird und zum Beispiel weniger feine Dimm-Abstufungen möglich sind.

Der Erfindung liegt die Aufgabe zugrunde, Vorrichtungen und Verfahren anzugeben, die die beschriebenen Probleme verringern. Aufgabe ist es insbesondere, einen Schaltregler und ein Betriebsgerät für den Betrieb von einem oder mehreren Leuchtmitteln bereitzustellen, die eine genaue Regelung oder Steuerung mit einem kostengünstigen Aufbau erlauben.

Diese Aufgabe wird gemäß den Merkmalen der unabhängigen Ansprüche gelöst. Die Erfindung wird durch die Merkmale der abhängigen Ansprüche weitergebildet.

Gemäß der vorliegenden Erfindung weist ein Schaltregler zum Betreiben von Leuchtmitteln eine Steuerschaltung zur Ausgabe eines digitalen Soll-Werts, um einen mit einer Spule gekoppelten Schalter des Schaltreglers anzusteuern, Mittel zum direkten oder indirekten Erfassen des durch die Spule oder den Schalter fließenden Stroms und zur Erzeugung eines diesen Strom wiedergebenden ersten analogen Signals, einen Digital-Analog-Wandler, der auf Basis des von der Steuerschaltung ausgegebenen digitalen Soll-Werts in ein zweites analoges Signal erzeugt, und einen Komparator, der das erste analoge Signal mit dem zweiten analogen Signal vergleicht, auf.

Um einen kostengünstigen Aufbau zu ermöglichen, ist die Auflösung des Digital-Analog-Wandlers mit N-Bit niedriger als die Auflösung des von der Steuerschaltung ausgegebenen digitalen Soll-Werts mit M-Bit (M>N), wobei der Schaltregler zusätzlich eine Regeleinrichtung aufweist, die dazu ausgelegt ist, den digitalen Eingangswert des Digital-Analog-Wandlers zeitlich zu variieren, um dem durch die niedrigere Auflösung des digitalen Eingangswerts gegenüber dem digitalen Soll-Wert auftretenden Fehler im zeitlichen Mittel entgegenzuwirken.

Hierzu wird vorzugsweise der digitale Eingangswert Summieren des digitalen Soll-Werts der Steuerschaltung und einer kumulierten Abweichung des von der Regeleinrichtung ausgegebenen digitalen Werts mit N-bit-Auflösung von dem digitalen Eingangswert. Das Kumulieren erfolgt dabei über eine feste, ggf. allerdings einstellbare Anzahl von Zyklen. Durch diese Berücksichtigung des Fehlers ändert sich der Eingangswert mit jedem Zyklus und überschreitet damit irgendwann die Zuordnungsschwelle, so dass der nächsthöhere oder nächstniedrigere N-Bit-Wert ausgegeben wird. Im zeitlichen Mittel wird damit von der Regeleinrichtung ein dem von der Steuerschaltung erzeugten M-Bit-Wert entsprechender Wert als Folge von N-Bit-Werten ausgegeben.

Gemäß der vorliegenden Erfindung erfolgt also eine Korrektur der durch die Verwendung des niedrigauflösenden Digital-Analog-Wandlers verlorenen Auflösung des ursprünglichen Soll-Werts durch gezieltes Erhöhen oder Verringern des digitalen Eingangswerts des Digital-Analog-Wandlers, so dass der aufsummierte Fehler bzw. die Abweichung über mehrere Wandlungszyklen über die Zeit im Mittel ausgeglichen wird und der zeitliche Mittelwert des digitalen Eingangswerts dem höheraufgelösten digitalen Soll-Wert entspricht. Hierbei ist die Regeleinrichtung vorzugsweise dazu ausgelegt, die Änderung des digitalen Eingangswerts sehr viel schneller bzw. mit einer sehr viel höheren Taktung durchzuführen als eine Änderung des von der Steuerschaltung ausgegebenen digitalen Soll-Werts bzw. die Taktung der Ausgabe/Änderung erfolgt.

Der Soll-Wert kann eine Abschaltschwelle für den den Schalter durchfließenden Strom anzeigen, wobei der Komparator bei einer Erreichen dieser Abschaltschwelle durch das zweite analoge Signal ein Ausschaltsignal für den Schalter ausgibt.

Die Regeleinrichtung kann einen Delta-Sigma-Modulator aufweisen, dessen Quantisierer den dem Delta-Sigma-Modulator zugeführten digitalen Soll-Wert in die niedrigere Auflösung N-Bit umsetzt bzw. umsetzen.

Der Delta-Sigma-Modulator kann ein M-N-Bit digital/digital Umsetzer erster, zweiter oder höherer Ordnung sein.

Der Schaltregler kann ein Abwärts-, Aufwärtswandler oder Sperrwandler sein.

Gemäß der vorliegenden Erfindung weist ein Betriebsgerät für Leuchtdioden einen der beschriebenen Schaltregler auf.

Nachfolgend wird die Erfindung anhand der beiliegenden Zeichnungen näher erläutert. Es zeigen:
Fig. 1 eine Schaltung eines Betriebsgeräts für Leuchtdioden nach einem ersten Ausführungsbeispiel gemäß der vorliegenden Erfindung,
Fig. 2 ein Diagramm mit Verläufen des in die Regeleinrichtung eingegebenen digitalen Signals und des von der Regeleinrichtung ausgegebenen Signals,
Fig. 3 eine Schaltung der Regeleinrichtung nach einem zweiten Ausführungsbeispiel gemäß der vorliegenden Erfindung und
Fig. 4 eine Schaltung der Regeleinrichtung nach einem dritten Ausführungsbeispiel gemäß der vorliegenden Erfindung.

Komponenten mit gleichen Funktionen sind in den Figuren mit gleichen Bezugszeichen gekennzeichnet.

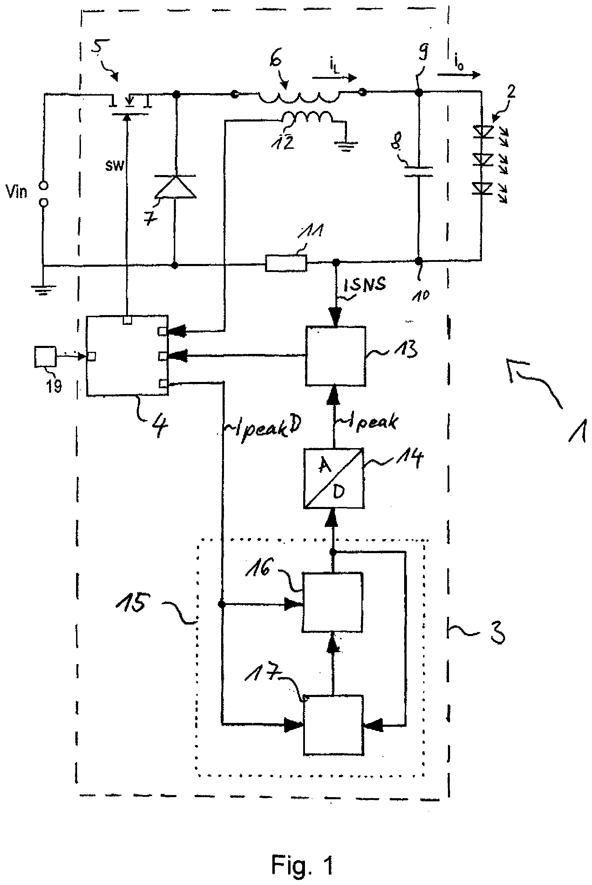

Fig. 1 zeigt eine Schaltung eines Betriebsgeräts 1 für Leuchtmittel 2 nach einem Ausführungsbeispiel gemäß der vorliegenden Erfindung, das einen Schaltregler 3 mit einer Steuerschaltung 4 und einen Abwärtswandler als Konverter umfasst. Das Leuchtmittel 2 kann eine Leuchtdiode (LED) oder mehrere LEDs umfassen. Die LEDs können anorganische oder organische LEDs sein.

Das Betriebsgerät 1 (Betriebsschaltung) dient zum Betrieb der wenigstens einen LED 2. Dem Betriebsgerät 1 wird eine Versorgungsspannung Vin zugeführt, die eine Gleichspannung oder eine gleichgerichtete Wechselspannung sein kann. Das Betriebsgerät 1 kann eine Leistungsfaktorkorrektur-schaltung umfassen, welche die Versorgungsspannung Vin bereitstellt (nicht gezeigt).

Der steuerbare Schalter 5 und die Spule 6 sind in Reihe zwischen den Eingang und den Ausgang des Schaltreglers 3 geschaltet. Wenn die wenigstens eine LED 2 mit dem Schaltregler 3 verbunden ist, sind der steuerbare Schalter 5, die Spule 6 und die wenigstens eine LED 2 in Reihe geschaltet. Eine Diode 7 ist parallel zu der wenigstens einen LED 2 und der Spule 6 geschaltet. Ein Kondensator 8 kann parallel zu den Ausgangsanschlüssen 9, 10 geschaltet sein, so dass der Kondensator 8 parallel zu der wenigstens einen LED 2 geschaltet ist. Der Kondensator 8 ist ein optionales Element der gezeigten Schaltung. Der Kondensator 8 kann bei weiteren Ausführungsbeispielen weggelassen werden.

Der steuerbare Schalter 5 kann ein Leistungsschalter sein. Der steuerbare Schalter 5 kann ein Feldeffekttransistor oder ein Bipolartransistor sein. Der steuerbare Schalter 5 kann ein Transistor mit isolierter Gateelektrode sein.

Die Steuerschaltung 4 kann den Schalter 5 des als Abwärtswandler ausgebildeten Konverters des Schaltreglers 3 in einem gepulsten Betrieb betreiben, so dass jeweils ein Ausgangsstrom in Form von Pulspaketen bereitgestellt wird. Beispielsweise können bei kleineren Dimmleveln Pulspakete erzeugt werden, um die gemittelte Stromstärke und somit die vom Auge wahrgenommene Helligkeit einzustellen.

Die Steuerschaltung 4 kann eine integrierte Halbleiterschaltung sein oder eine integrierte Halbleiterschaltung umfassen. Die Steuerschaltung 4 kann als ein Prozessor, ein Mikroprozessor, ein Controller, ein Mikrocontroller oder eine anwendungsspezifische Spezialschaltung (ASIC, "Application Specific Integrated Circuit") oder eine Kombination der genannten Einheiten ausgestaltet sein.

Im eingeschalteten Zustand des steuerbaren Schalters 5 fließt ein Strom i_{L} durch die LED(s) 2 und durch die Spule 6, die dadurch magnetisiert und mit Energie geladen wird. Die Diode 7 sperrt in diesem Zustand. Nach dem Ausschalten des steuerbaren Schalters 5 treibt die Spule 5 den durch sie fließenden Strom i_{L} weiter durch die LED(s) 2 und die Diode 7. Die im Magnetfeld der Spule 5 gespeicherte Energie entlädt sich. Parallel dazu kann am Beginn des Einschaltens des steuerbaren Schalters 5 der Kondensator 8 geladen werden. Während der Ausschaltphase des steuerbaren Schalters 5, der sogenannten Freilaufphase, kann sich der Kondensator 8 entladen und trägt zum Stromfluss durch die LED(s) 2 bei. Bei geeigneter Dimensionierung des Kondensators 8 kann dies zu einer Glättung des Stroms durch die LED(s) 2 führen.

Der aktuelle Spulenstrom i_{L} kann während der Einschaltphase mittels der über einen Messwiderstand 11 abfallenden Spannung erfasst werden. Der aktuelle Spulenstrom i_{L} kann insbesondere während der Ausschaltphase mit einer weiteren Induktivität 12, die magnetisch mit der Spule 6 gekoppelt ist, der Steuerschaltung 4 zugeführt und überwacht werden. Alternativ kann auch ein Strommesstransformator (nicht gezeigt) zur Erfassung des aktuellen Spulenstroms i_{L} vorhanden sein, der in Serie zu der Spule 6 angeordnet ist.

Ein Komparator 13 vergleicht die den Spulenstrom i_{L} wiedergebende, an dem Widerstand 11 abfallende Spannung ISNS mit einem oberen Schaltschwellenwert Iₚₑₐₖ und gibt, wenn der Spulenstrom i_{L} den oberen Schaltschwellenwert Iₚₑₐₖ (Abschaltschwelle) erreicht, ein Signal an die Steuerschaltung 4 aus, welches ein Ausschalten des Schalters 5 bewirkt.

Mittels der weiteren Induktivität 12 ermittelt die Steuerschaltung, wann der Spulenstrom i_{L} während der Entladephase (Ausschaltphase) auf null abgefallen ist (und somit die Spule 6 entmagnetisiert ist) und bewirkt ein Einschalten des Schalters 5, wenn der Spulenstrom i_{L} den unteren Schaltschwellenwert I_{low} erreicht, insbesondere, wenn der ansteigende Spulenstrom i_{L}, eine ansteigende Flanke des Spulenstroms i_{L}, den unteren Schaltschwellenwert Ilow erreicht (low/high transition).

Im dargestellten Ausführungsbeispiel ist das Ansteuern des Schalters 5 direkt durch die Steuerschaltung 4 realisiert. Es ist jedoch ebenso möglich und kann in Zusammenhang mit der Erfindung sogar vorteilhaft sein, wenn die Steuerschaltung lediglich den Schaltschwellenwert Iₚₑₐₖ ausgibt und das Erzeugen des eigentlichen Schaltsignals für den Schalter 5 in einer nachgelagerten Treiberschaltung erfolgt. Der Steuerschaltung 4 kann durch eine externe Signalquelle 19 z.B. ein den Dimmlevel festlegender Befehl zugeführt werden, auf dessen Basis die Steuerschaltung den Schaltschwellenwert IₚₑₐₖD erzeugt.

Der in der Steuerschaltung 4 erzeugte Schaltschwellenwert I_{Peak}D liegt als digitaler Wert mit einer Auflösung von beispielsweise 16 Bit vor und soll von einem Digital-Analog-Wandler 14 in einen analogen Wert bzw. ein analoges Signal, das den oberen Schaltschwellenwert Iₚₑₐₖ anzeigt, umgewandelt und an den Komparator 13 ausgegeben werden. Der Digital-Analog-Wandler 14 hat eine niedrigere Auflösung von beispielsweise 12 Bit.

Die zwischen der Steuerschaltung 4 und dem Digital-Analog-Wandler 14 angeordnete Regeleinrichtung 15 weist einen Quantisierer 16, der zunächst den von der Steuerschaltung 4 empfangenen Schaltschwellenwert I_{Peak}D in einen entsprechenden 12 Bit-Wert umsetzt und diesen umgesetzten Wert an den Digital-Analog-Wandler 14 ausgibt sowie eine Steuereinrichtung 17 auf, die eine dabei auftretende Differenz/Abweichung zwischen dem von der Steuerschaltung 4 ausgegebenen 14 Bit-Wert und dem von dem Quantisierer 16 umgesetzten 12 Bit-Wert ermittelt. Das dem Quantisierer eingansseitig zugeführte Signal ist die Summe des Schaltschwellenwerts I_{Peak}D und der aufsummierten Abweichungen. Damit wird jeweils in einem nachfolgenden Zyklus der summierte Fehler der letzten Ausgabezyklen der Regeleinrichtung 15 berücksichtigt. Summiert sich dieser Fehler, weil z.B. der erzeugte 12-Bit-Wert wiederholt größer ist, als der eigentlich zu erreichende 14-Bit-Wert, so ergibt sich eine Abweichung zwischen mit negativen Vorzeichen, das zu dem von der Steuerschaltung 4 ausgegebenen 14-Bit-Wert addiert wird. Der eingangsseitige Wert wird also mit jedem Zyklus reduziert, bis die Schwelle zur Ausgabe des nächst niedrigeren 12-Bit-Werts erreicht ist. Dieser liegt dann unter dem 14-Bit-Schaltschwellenwert und das Vorzeichen bei der Ermittlung der Abweichung wechselt.

Damit wird erreicht, dass auf der Grundlage der ermittelten Abweichung der Quantisierer 16 derart steuert, dass der von dem Quantisierer 16 abgegebene 12 Bit-Wert im zeitlichen Mittel über einen bestimmten Zeitraum dem 14 Bit-Wert entspricht, der während des Zeitraums von der Steuerschaltung 4 ausgegeben wurde.

Die Abweichung bzw. der Quantisierungsfehler entsteht mit der Zuordnung des 14 Bit-Werts zu einer der 12 Bit Quantisierungsstufen durch den Quantisierer 16. Die Steuereinrichtung 17 bestimmt auf der Grundlage der ermittelten Abweichung, ob für eine nächste Umsetzung die dem digitalen Schaltschwellenwert I_{Peak}D zuzuordnende Quantisierungsstufe oberhalb oder unterhalb des digitalen Schaltschwellenwertes I_{Peak}D liegen soll.

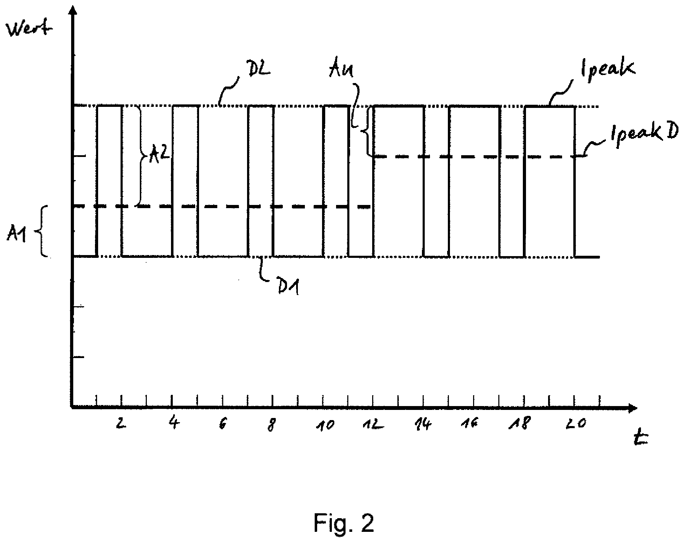

In Fig. 2 ist das Prinzip dieser Zuordnung vereinfacht dargestellt. In dem Diagramm in Fig. 2 stellt die gestrichelte Linie den zeitlichen Verlauf des von der Steuerschaltung 4 an die Regeleinrichtung 15 abgegebenen digitalen Schaltschwellenwerts I_{Peak}D und die durchgezogene Linie den zeitlichen Verlauf des von dem Quantisierer 16 abgegebenen Werts dar. Der Schaltschwellenwert I_{Peak}D befindet sich zwischen den 12-Bit-Quantisierungsstufen D1 und D2 und wird von der Steuerschaltung 4 zum Zeitpunkt t=12 geändert bzw. springt auf einen neuen Wert.

Zum Zeitpunkt t=0 ordnet der Quantisierer 16 den Schaltschwellenwert I_{Peak}D der Quantisierungsstufe D1 zu und gibt den entsprechenden Wert an den Digital-Analog-Wandler 14 aus. Die Steuereinrichtung 17 bestimmt die in Fig. 2 gezeigte Abweichung A1 (I_{Peak}D - D1) und bewirkt durch beispielsweise ein Hinzufügen des Wertes der Abweichung zu dem von der Steuerschaltung 4 ausgegebenen Schaltschwellenwert I_{Peak}D für den nächsten Wandlungszyklus zum Zeitpunkt t=1 eine Zuordnung der Quantisierungsstufe D2, was zu einer negativen Abweichung A2 und zu einer aufsummierten Abweichung Aₛᵤₘₘᵢₑᵣₜ=A1+A2 führt. Die aufsummierte Abweichung wird im nächsten Zyklus zur eingangsseitigen Korrektur des vorgegebenen Schaltschwellenwerts verwendet. Der Vorgang wird wiederholt, so dass die mittlere Abweichung Aₘᵢₜₜₑₗ gegen null geht.

Mit dem Schaltschwellenwert I_{Peak}D wird z.B. auch der Dimm-Wert/Level vorgeben oder eine Umgebungstemperatur kompensiert, welcher sich im Vergleich zur Schaltfrequenz meist nur langsam ändert bzw. über viele Wandlungszyklen konstant ist. Es ist auch möglich, an dem Ausgang des Digital-Analog-Wandlers 14 ein Tiefpassfilter vorzusehen, um regelungsbedingte Schwankungen zu unterdrücken.

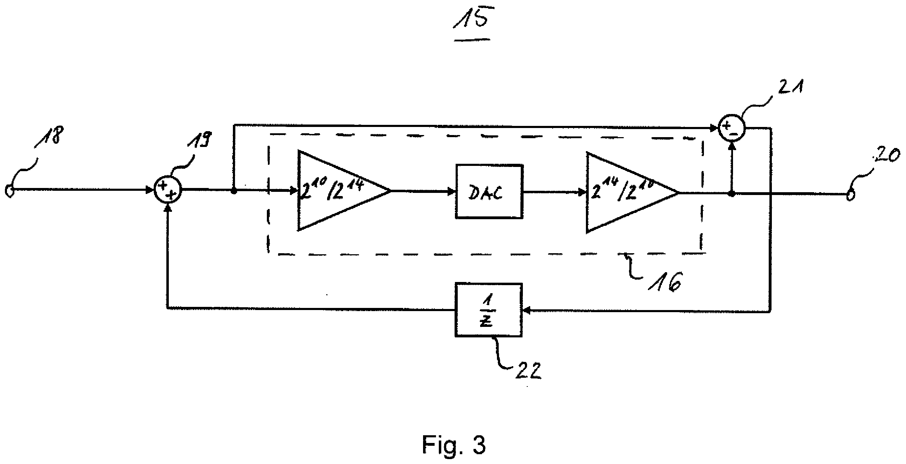

Die Regeleinrichtung 15 kann in einfacher Weise mit einem Delta-Sigma-Modulator aufgebaut werden. Fig. 3 zeigt eine solche Regeleinrichtung 15 nach einem Ausführungsbeispiel gemäß der vorliegenden Erfindung, bei dem die Regeleinrichtung 15 einen 10-Bit Digital-Analog-Wandler 14 (nicht gezeigt) ansteuern soll. Die in Fig. 3 gezeigte Regeleinrichtung 15 weist einen Quantisierer 16 auf, der den von der Steuerschaltung 4 über einen Eingang 18 und ein Addierglied 19 aus dem empfangenen Schaltschwellenwert I_{Peak}D erzeugten eingangsseitigen Digitalwert mit 14 Bit in einen entsprechenden 10 Bit-Wert umsetzt und an den Digital-Analog-Wandler 14 (nicht gezeigt) über den Ausgang 20 ausgibt.

Die Abweichung/Differenz zwischen dem eingangsseitigen Digitalwert und dem von dem Quantisierer 16 ausgegebenen 10 Bit-Wert wird von einem Differenzier-Glied 21 für jeden Wandler/Quantisier-Zyklus ermittelt und einem Integrator 22 zu geführt. Der Integrator 22 summiert Abweichungen über mehrere aufeinander folgende Wandlungszyklen und gibt diese Summe an das Addierglied 19 ab, welches die summierte Abweichung zu dem über den Eingang 18 empfangenen Schaltschwellenwert I_{Peak}D addiert und diese Summe an den Quantisierer 16 als Eingangsgröße abgibt.

Mit jedem Wandler/Quantisier-Zyklus kann der 10 Bit-Eingangswert des Digital-Analog-Wandlers 14 variiert werden, um dem durch die niedrigere Auflösung des digitalen 10 Bit-Eingangswerts gegenüber dem digitalen 14 Bit-Soll-Wert auftretenden Fehler im zeitlichen Mittel entgegenzuwirken.

Die in Fig. 3 gezeigte Regeleinrichtung 15 stellt einen Delta-Sigma-Modulator mit einem digital/digital Umsetzer erster Ordnung dar. Es ist jedoch auch möglich mehrere Delta-Sigma-Elemente (Zellen) und/oder einen digital/digital Umsetzer höherer Ordnung einzusetzen.

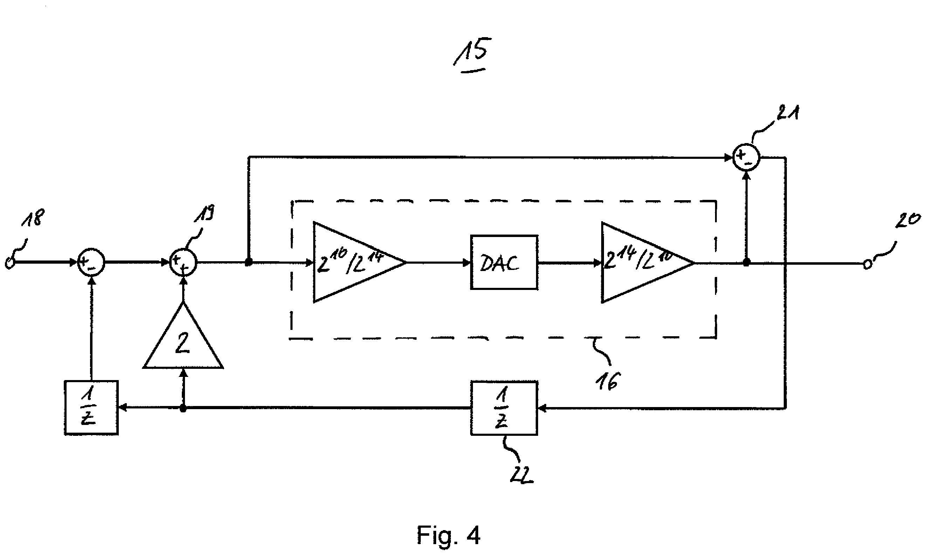

Fig. 4 zeigte eine Regeleinrichtung 15 mit einem digital/digital Umsetzer zweiter Ordnung.

Die Wahl der Spannung ISNS als Vergleichsgröße ist nur beispielhaft. Es können alternativ oder zusätzlich auch andere Messgrößen in einem Abwärts-, Aufwärtswandler oder Sperrwandler erfasst und verglichen werden.

## Patentansprüche

1. Schaltregler zum Betreiben von einem oder mehreren Leuchtmitteln, aufweisend
eine Spule (6),
einen mit der Spule (6) gekoppelten Schalter (5),
eine Steuerschaltung (4) zur Ausgabe eines digitalen Soll-Werts (IₚₑₐₖD) um den mit der Spule (6) gekoppelten Schalter (5) des Schaltreglers (3) anzusteuern,
Mittel (11) zum direkten oder indirekten Erfassen des durch die Spule (6) oder den Schalter (5) fließenden Stroms und zur Erzeugung eines diesen Strom wiedergebenden ersten analogen Signals (ISNS),
einen Digital-Analog-Wandler (14), der dazu ausgelegt ist, ein zweites analoges Signal auf der Grundlage des von der Steuerschaltung (4) ausgegebenen digitalen Soll-Werts (IₚₑₐₖD) auszugeben, **dadurch gekennzeichnet, dass** der Schaltregler einen Komparator (13) aufweist, der dazu ausgelegt ist, das erste analoge Signal (ISNS) mit dem zweiten analogen Signal (Iₚₑₐₖ) zu vergleichen, und
die Auflösung des von der Steuerschaltung (4) ausgegebenen digitalen Soll-Werts (IₚₑₐₖD) höher als die Auflösung des Digital-Analog-Wandlers ist, und der Schaltregler zusätzlich
eine Regeleinrichtung (15) aufweist, die dazu ausgelegt ist, den digitalen Eingangswert des Digital-Analog-Wandlers zeitlich zu variieren, um dem durch die niedrigere Auflösung des digitalen Eingangswerts gegenüber dem digitalen Soll-Wert (IₚₑₐₖD) auftretenden Fehler im zeitlichen Mittel entgegenzuwirken.

2. Schaltregler nach Anspruch 1, wobei
der Soll-Wert eine Abschaltschwelle (I_{Peak}) anzeigt, und
der Komparator (13), dazu ausgelegt ist, bei einer Übereinstimmung ein Ausschaltsignal für den Schalter (5) auszugeben.

3. Schaltregler nach Anspruch 1 oder 2, wobei
die Regeleinrichtung (15) einen Delta-Sigma-Modulator (16, 19, 21, 22) aufweist, dessen Quantisierer (16) den dem Delta-Sigma-Modulator (16, 19, 21, 22) zugeführten digitalen Soll-Wert (IₚₑₐₖD) in die niedrigere Auflösung umsetzt bzw. umsetzen.

4. Schaltregler nach Anspruch 3, wobei
der Delta-Sigma-Modulator (16, 19, 21, 22) ein digital/digital Umsetzer erster oder höherer Ordnung ist.

5. Schaltregler nach einem der Ansprüche 1 bis 4, wobei
der Schaltregler (3) ein Abwärts-, Aufwärtswandler oder Sperrwandler ist.

6. Betriebsgerät für Leuchtdioden, aufweisend einen Schaltregler nach einem der Ansprüche 1 bis 5.

## Claims

1. Switching regulator for operating one or more illuminants, comprising
a coil (6),
a switch (5) coupled to the coil (6),
a control circuit (4) for outputting a digital nominal value (IₚₑₐₖD) in order to control the switch (5) of the switching regulator (3) coupled to the coil (6),
means (11) for directly or indirectly detecting the current flowing through the coil (6) or the switch (5), and for generating a first analog signal (ISNS) representing this current,
a digital/analog converter (14) designed to output a second analog signal based on the digital nominal value (IₚₑₐₖD) output by the control circuit (4), **characterized in that** the switching regulator comprises a comparator (13) designed to compare the first analog signal (ISNS) with the second analog signal (Iₚₑₐₖ), and
the resolution of the digital nominal value (IₚₑₐₖD) output by the control circuit (4) is higher than the resolution of the digital/analog converter, and the switching regulator additionally comprises
a regulating device (15) which is designed to vary the digital input value of the digital/analog converter over time in order to counteract the time-averaged error occurring due to the lower resolution of the digital input value relative to the digital nominal value (IₚₑₐₖD).

2. Switching regulator according to Claim 1, wherein
the nominal value indicates a switch-off threshold (Iₚₑₐₖ), and
the comparator (13) is designed to output a switch-off signal for the switch (5) in the event of an agreement.

3. Switching regulator according to Claims 1 or 2, wherein
the regulating device (15) has a delta-sigma modulator (16, 19, 21, 22), the quantizer(s) (16) of which convert(s) the digital nominal value (IₚₑₐₖD) supplied to the delta-sigma modulator (16, 19, 21, 22) into the lower resolution.

4. Switching regulator according to Claim 3, wherein
the delta-sigma modulator (16, 19, 21, 22) is a first-order or higher-order digital/digital converter.

5. Switching regulator according to any one of Claims 1 to 4, wherein
the switching regulator (3) is a buck converter, boost converter, or flyback converter.

6. Operating device for light-emitting diodes, comprising a switching regulator according to any one of Claims 1 to 5.

## Revendications

1. Régulateur de commutation destiné au fonctionnement d'au moins un moyen d'éclairage, comprenant
une bobine (6),
un commutateur (5) couplé à la bobine (6),
un circuit de commande (4) pour délivrer une valeur de consigne (IₚₑₐₖD) numérique pour commander le commutateur (5) couplé à la bobine (6) du régulateur de commutation (3),
un moyen (11) pour détecter directement ou indirectement le courant circulant à travers la bobine (6) ou le commutateur (5) et pour générer un premier signal analogique (ISNS) représentant ledit courant,
un convertisseur numérique-analogique (14), lequel est conçu pour délivrer un second signal analogique en fonction de la valeur de consigne (IₚₑₐₖD) numérique délivrée par le circuit de commande (4), **caractérisé en ce que** le régulateur de commutation comprend un comparateur (13), lequel est conçu pour comparer le premier signal analogique (ISNS) au second signal analogique (Iₚₑₐₖ) et
la résolution de la valeur de consigne (IₚₑₐₖD) numérique délivrée par le circuit de commande (4) est supérieure à la résolution du convertisseur numérique-analogique, et le régulateur de commutation comprend en outre
un dispositif de régulation (15), lequel est conçu pour faire varier dans le temps la valeur numérique d'entrée du convertisseur numérique-analogique afin d'éviter dans la moyenne temporelle une erreur causée par la résolution de la valeur d'entrée numérique inférieure par rapport à la valeur de consigne (IₚₑₐₖD) numérique.

2. Régulateur de commutation selon la revendication 1, dans lequel
la valeur de consigne indique un seuil d'arrêt (Iₚₑₐₖ) et
le comparateur (13) est conçu pour délivrer, en cas de correspondance, un signal d'arrêt pour le commutateur (5).

3. Régulateur de commutation selon la revendication 1 ou 2, dans lequel
le dispositif de régulation (15) comporte un modulateur delta-sigma (16, 19, 21, 22), dont le quantificateur (16) converti la valeur de consigne (IₚₑₐₖD) numérique fournie au modulateur delta-sigma (16, 19, 21, 22) en résolution inférieure.

4. Régulateur de commutation selon la revendication 3, dans lequel
le modulateur delta-sigma (16, 19, 21, 22) est un convertisseur numérique/numérique de premier ordre ou d'ordre supérieur.

5. Régulateur de commutation selon l'une quelconque des revendications 1 à 4, dans lequel
le régulateur de commutation (3) est un convertisseur abaisseur, élévateur ou bloqué.

6. Dispositif de fonctionnement pour diodes électroluminescentes, comprenant un régulateur de commutation selon l'une quelconque des revendications 1 à 5.
